# DEMANDE DE BREVET EUROPEEN

(11) **EP 1 911 643 A1**
(43) Date de publication de la demande: **16.04.2008**
(21) Numéro de dépôt: 07118391.7
(22) Date de dépôt: 12.10.2007
(51) Int. Cl.: B60S 3/04, E04B 1/343

(54) **Dispositif mobile de lavage ou de désinfection de véhicules terrestres**

(30) Priorité: 12.10.2006 FR 0608919
(71) Demandeur: Philippe Mourrey, Victor, 57710 Aumetz (FR)
(72) Inventeur: Philippe Mourrey, Victor, 57710 Aumetz (FR)
(74) Mandataire: Brungard, Yves Francois

(57) **Abrégé**

Un dispositif mobile de lavage ou de désinfection comporte un tunnel pour le passage de véhicules, des moyens de projection (15) d'un liquide contre le véhicule, le tunnel comportant quatre parois, caractérisé en ce que les parois du tunnel sont mobiles entre une position de transport dans laquelle le dispositif (1) a un gabarit inférieur à un gabarit de référence, et une position d'utilisation dans laquelle la section intérieure du tunnel permet le passage de véhicules ayant le gabarit de référence.

## Description

L'invention concerne un dispositif mobile de lavage ou de désinfection de véhicules terrestres.

Lorsque l'on souhaite laver un véhicule terrestre, tel qu'une voiture ou un camion, on peut utiliser un dispositif à jets d'eau qui projette de l'eau contre le véhicule avec une pression suffisante pour nettoyer celui-ci. Dans certaines configurations, le dispositif comporte au moins une rampe comportant plusieurs gicleurs, la rampe ayant une forme pour entourer au moins partiellement une section du véhicule. La rampe peut être fixe et le véhicule se déplace perpendiculairement au plan de la rampe, ou la rampe est mobile et se déplace de l'avant vers l'arrière du véhicule. Les gicleurs sont orientés en direction du véhicule.

On connaît par exemple par le document US 2,981,266 un dispositif de ce type se présentant sous la forme d'une remorque. La remorque comporte un châssis monté sur roues, des parois formant avec le châssis un tunnel et des rampes d'accès pour permettre à des véhicules de rouler sur le châssis et de passer dans le tunnel, entre les parois. Le tunnel comporte des rampes le long des parois permettant de laver le véhicule lors de son passage à faible vitesse dans le tunnel. La remorque peut ainsi être déplacée d'un endroit à un autre en fonction des besoins.

Le gabarit des véhicules qui peuvent passer sur la remorque est nécessairement inférieur au gabarit de la remorque. Les véhicules tels que les camions qui sont aux limites des gabarits autorisés ne peuvent donc pas être lavés avec un tel dispositif.

Lors de crises sanitaires, en particulier d'épizooties, il est apparu important de désinfecter les véhicules sortant d'une zone touchée par des cas d'infection d'animaux, pour éviter ou limiter la propagation de virus ou de microbes. Une telle désinfection peut être faite en aspergeant le véhicule avec un désinfectant, par exemple à l'aide d'un pulvérisateur. Cependant cette opération peut être assez longue et doit être mise en oeuvre manuellement.

Le document DE 102 08 927 montre un dispositif comportant un portique supportant des rampes d'aspersion d'un produit désinfectant, le portique étant placé au-dessus d'un petit bassin de rétention. Le portique peut se démonter en éléments de petite taille.

Même si ce dispositif est simple de mise en oeuvre, il ne permet pas d'éviter la dispersion du désinfectant, en particulier en présence de vent lorsque le dispositif est installé à l'extérieur. De plus la mise en place du dispositif demande beaucoup de manutention.

L'invention vise à fournir un dispositif de lavage ou de désinfection de véhicule terrestre qui soit mobile, simple à mettre en oeuvre et qui permette de confiner et récupérer le liquide injecté et de traiter les véhicules ayant un grand gabarit.

Avec ces objectifs en vue, l'invention a pour objet un dispositif mobile de lavage ou de désinfection comportant un tunnel pour le passage de véhicules, des moyens de projection d'un liquide contre le véhicule, le tunnel comportant quatre parois. Les parois du tunnel sont coulissantes les unes par rapport aux autres entre une position de transport dans laquelle le dispositif a un gabarit inférieur à un gabarit de référence, et une position d'utilisation dans laquelle la section intérieure du tunnel permet le passage de véhicules ayant le gabarit de référence.

Le dispositif selon l'invention est aisément transportable puisque ses dimensions peuvent dans un gabarit adapté au transport standard sur route, sans nécessiter de convoi exceptionnel. Cependant, grâce à la mobilité des parois, le dispositif peut changer de section de passage de manière à être apte au passage de véhicules tels que des camions. Les véhicules traversent le tunnel à basse vitesse selon un seul sens pendant que le liquide est projeté contre le véhicule pour le laver ou pour le désinfecter. Aucune marche arrière n'est nécessaire, ce qui permet un traitement rapide d'un ensemble de véhicule, un véhicule sortant pouvant être suivi de près par un véhicule entrant. Selon l'utilisation prévue du dispositif, le liquide projeté est de l'eau de lavage ou du désinfectant. Le dispositif peut être spécifique à l'une des utilisations ou adapté aux deux utilisations, au choix de l'utilisateur.

Selon une disposition de réalisation, le dispositif comporte un châssis et deux ensembles latéraux, chaque ensemble latéral étant monté coulissant par rapport au châssis et par rapport à l'autre élément dans une direction transversale par rapport à l'axe du tunnel. Le châssis est destiné à reposer sur le sol ou à être fixé sur un véhicule de transport par des moyens adaptés. L'écartement des éléments latéraux permet d'augmenter la largeur admissible des véhicules traversant le tunnel.

Selon une autre disposition de réalisation, le dispositif comporte un ensemble inférieur et un ensemble supérieur, chaque ensemble étant monté coulissant par rapport à l'autre élément dans une direction verticale. En soulevant l'ensemble supérieur par rapport à l'ensemble inférieur, on augmente la hauteur admissible des véhicules traversant le tunnel.

Pour une combinaison de ces deux dispositions, l'ensemble inférieur comporte le châssis et deux éléments d'angle inférieurs de part et d'autre du châssis, l'ensemble supérieur comportant deux éléments d'angle supérieurs monté coulissants l'un par rapport à l'autre, chaque élément latéral étant formé par l'un des éléments d'angle inférieur et l'un des éléments d'angle supérieur montés coulissants entre eux.

De manière particulière, les moyens de projection comportent au moins une rampe sur chaque élément d'angle, les rampes ayant des longueurs de recouvrement dans la position de transport de manière à pouvoir projeter du liquide sur toute la section du véhicule lorsque le dispositif est dans la position d'utilisation. Les longueurs de recouvrement sont dans des sections décalées du tunnel de manière à permettre le recouvrement. Ainsi, il n'est pas nécessaire de démonter les rampes avant de passer de la position d'utilisation à la position de transport, et inversement.

Pour passer de la position de transport à la position d'utilisation et inversement, le dispositif comporte par exemple des moyens hydrauliques d'actionnement pour passer de la position de transport à la position d'utilisation et inversement.

Selon une disposition particulière, chaque élément latéral comporte un chemin de roulement pour des roues du véhicule. L'écartement entre les chemins de roulement de par et d'autre du tunnel est ainsi adapté à l'écartement des éléments latéraux, et n'est pas limité à la largeur minimale disponible dans la position de transport.

Selon un perfectionnement, les chemins de roulement sont en recouvrement au-dessus du châssis.

Selon un autre perfectionnement, le châssis comporte un caniveau de récupération des écoulements de liquide. Les chemins de roulement sont en recouvrement au-dessus du caniveau, ce qui canalise le liquide qui ruisselle vers le caniveau. Ensuite le liquide peut être repris à la sortie du caniveau pour être stocké dans une cuve de récupération ou recyclé avec un filtrage et un éventuel traitement adapté.

L'invention sera mieux comprise et d'autres particularités et avantages apparaîtront à la lecture de la description qui va suivre, la description faisant référence aux dessins annexés parmi lesquels :
- la figure 1 est une vue schématique en perspective de la structure d'un dispositif conforme à l'invention ;

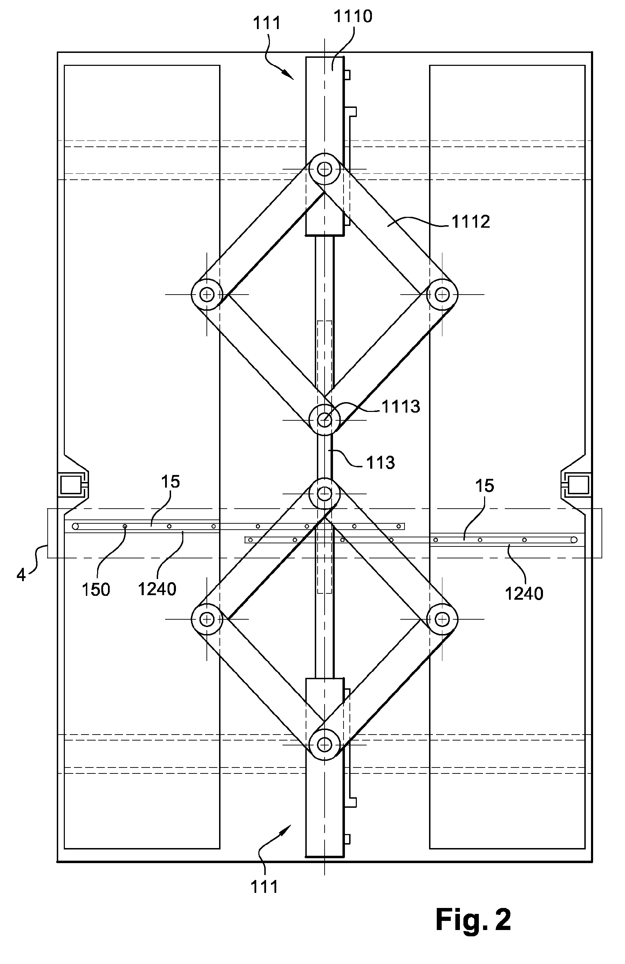

- la figure 2 est une vue de dessus en coupe du dispositif de la figure 1 ;
- la figure 3 est une vue en coupe selon la ligne III-III de la figure 2 ;
- la figure 4 est une vue du détail IV de la figure 2 ;
- la figure 5 est une vue montrant côte à côte un camion transportant le dispositif de la figure 1 en position de transport et le dispositif en position d'utilisation.

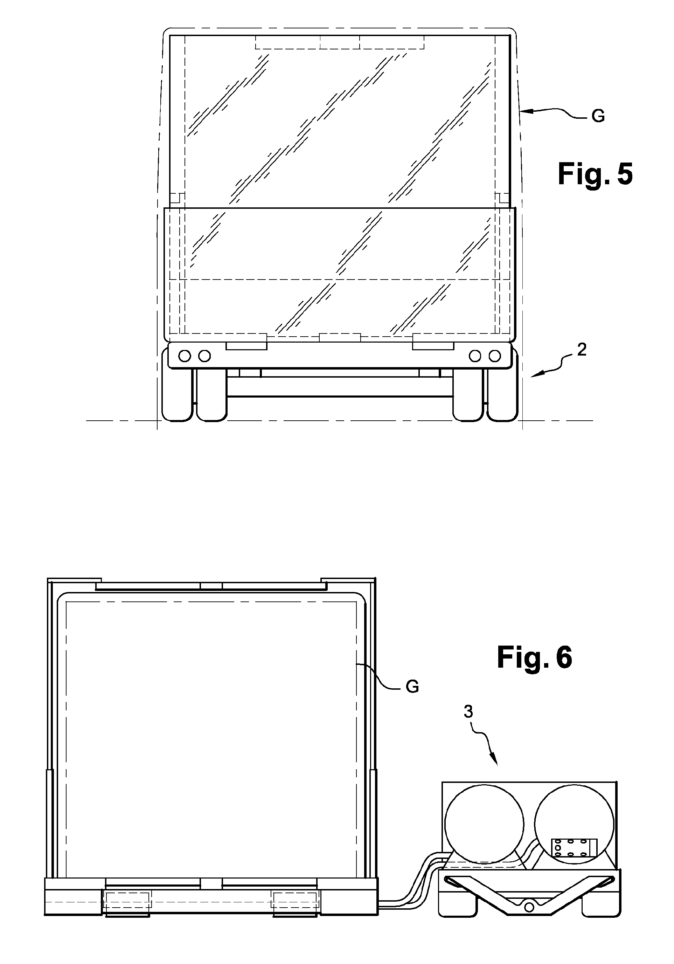

Le dispositif 1 de lavage ou de désinfection conforme à l'invention se présente sous la forme extérieure d'un caisson apte à être transporté sur un véhicule 2, comme le montre la figure 5. L'ensemble véhicule 2 et dispositif 1 selon l'invention s'inscrit dans un gabarit routier réglementaire ne nécessitant pas de mesures exceptionnelles.

Lorsqu'il est en position d'utilisation, tel que représenté également sur la figure 5, le dispositif 1 a la forme d'un tunnel, posé sur le sol, dans lequel un véhicule peut circuler en entrant par une extrémité et en ressortant par l'autre extrémité. Pendant la traversée, le véhicule est arrosé par un liquide de lavage ou de désinfection.

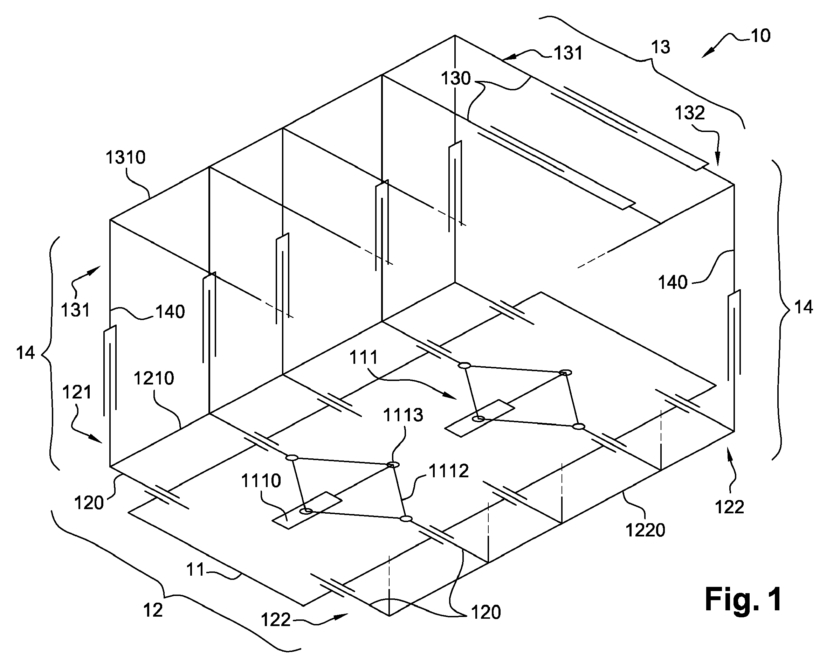

En se référant à la figure 1, le dispositif 1 comporte une structure 10 par exemple métallique comportant un châssis 11, deux éléments d'angle inférieurs 121, 122 montés coulissants par rapport au châssis 11 selon une direction transversale, formant un ensemble inférieur 12. La structure 10 comporte en outre deux éléments d'angle supérieurs 131, 132 montés coulissants entre eux selon la direction transversale, chaque élément d'angle supérieur 131, 132 étant coulissant selon une direction verticale par rapport à l'un des éléments d'angle inférieurs 121, 122. Ils forment un ensemble supérieur 13. L'un des éléments d'angle inférieurs 121, 122 forme un ensemble latéral 14 avec l'un des éléments d'angle supérieurs 131, 132 qui coulisse par rapport à lui.

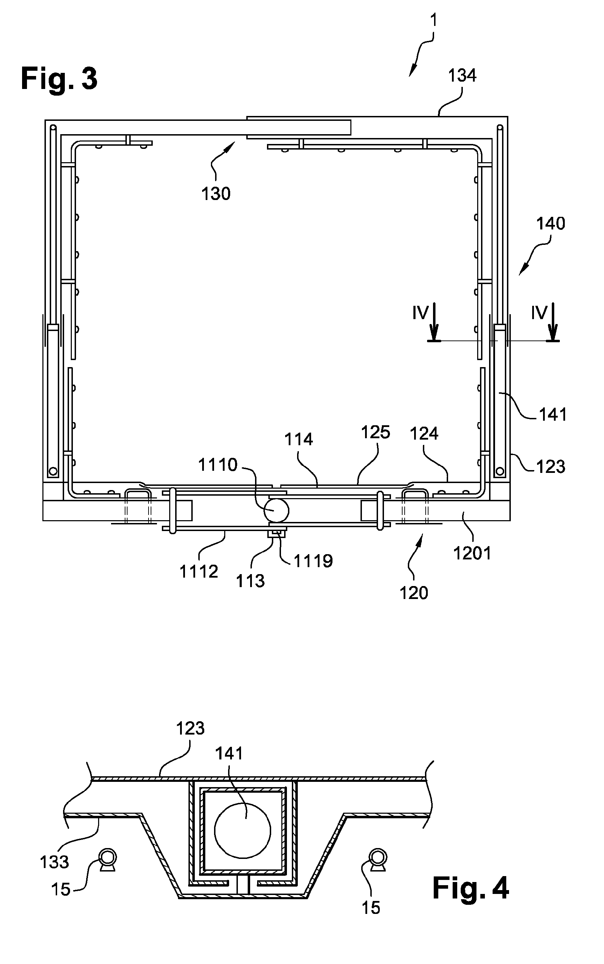

Chaque élément d'angle 121, 122, 131, 132 comporte une longrine 1210, 1220, 1310, 1320 s'étendant dans une direction longitudinale sur laquelle sont fixées les extrémités de glissières 120, 140, 130 permettant les différents coulissements. Les glissières 120, 140, 130 sont formées par exemple par des tubes emboîtés l'un dans l'autre, comme représenté sur les figures 3 et 4.

Le châssis 11 comporte des moyens hydrauliques pour provoquer le coulissement des ensembles latéraux 14 par rapport au châssis 11. Les moyens hydrauliques comportent deux ensembles d'écartement 111, chaque ensemble d'écartement 111 comportant un vérin 1110 et une genouillère 1112 pour transmettre le mouvement de manière synchrone aux ensembles latéraux 14. Pour cela, une articulation centrale 1113 de la genouillère comporte un pion 1114 faisant saillie dans un guide 113 en forme de U et fixé sur le châssis 11. La genouillère agit sur l'extrémité de coulisseaux 1201 fixés aux éléments d'angle inférieurs 121, 122 et faisant partie de glissières 120.

Deux des glissières 140 de chaque ensemble latéral sont pourvues d'un vérin 141 de manière à actionner le mouvement de coulissement vertical de l'ensemble supérieur 13.

Une cloison inférieure 123 est fixée verticalement à la structure de l'élément d'angle inférieur 121, 122 et s'étend sur toute sa longueur. Une cloison supérieure 133 est fixée à la structure de l'élément d'angle supérieur 131, 132, en contournant les glissières 140 par l'intérieur du tunnel. Un premier élément de toiture 134 est fixé horizontalement sur l'un des éléments d'angle supérieurs 132. Un deuxième élément de toiture, non représenté, est fixé horizontalement sur l'autre des éléments d'angle supérieurs 131, en contournant les glissières 130 par l'intérieur du tunnel.

Le châssis 11 comporte un caniveau 114 apte à récupérer le liquide ruisselant dans le tunnel. Les éléments d'angle inférieurs 121, 122 comportent des chemins de roulement 124 recouvrant partiellement le caniveau 114, que le dispositif 1 soit en position de transport ou en position d'utilisation. Les chemins de roulement 124 se prolongent par des volets 125 en caillebotis montés pivotant selon un axe longitudinal. Ils permettent de constituer une surface de marche ou de roulage au-dessus du caniveau 114 lorsque le dispositif 1 est en position d'utilisation. Les volets 125 sont relevés pour mettre le dispositif 1 dans la position de transport.

Le dispositif 1 comporte une zone de rampes H, mais pourrait aussi en comporter plusieurs. Dans la zone de rampes H, chaque élément d'angle 121, 122, 131, 132 comporte une rampe 15 en forme d'équerre et comportant des gicleurs 150 à jet large et plat. Les rampes 15 sont placées le long des parois 123, 133, 134, 135, des éléments d'angle. Elles sont suffisamment longues pour pouvoir projeter le liquide sur toute la périphérie d'un véhicule traversant le tunnel lorsque le dispositif 1 est en position d'utilisation. Les rampes 15 de deux éléments d'angle adjacents sont décalées dans le sens longitudinal de manière à permettre le passage en position de transport sans interférence. Les chemins de roulement 124 comportent des rainures 1240 pour y insérer les rampes 15 sans que celles-ci ne fassent saillie par rapport aux chemins de roulement 124. De même, les rampes 15 s'étendent sous les volets 125 en caillebotis qui prévoient des orifices, non représentés, pour le passage des jets.

Une unité de puissance 3 permet de fournir au dispositif 1 le fluide de lavage ou de désinfection sous pression, de le récupérer et le stocker. L'unité de puissance 3 fournit également le fluide hydraulique sous pression pour la manoeuvre des vérins du dispositif 1. L'unité de puissance est montée sur roues et est apte à être contenue dans le dispositif 1 lorsque celui-ci est en position de transport. Le dispositif comporte des connecteurs pour échanger les fluides en provenance ou vers l'unité de puissance 3, et éventuellement une alimentation électrique ou une liaison vers un automate.

Le dispositif, chargé initialement sur le camion 2 et en position de transport, est amené sur un lieu d'utilisation et déposé sur le sol par des moyens appropriés. L'unité de puissance est extraite du tunnel et placée à proximité du dispositif. Des connexions sont établies entre le dispositif et l'unité de puissance. Les ensembles d'écartement sont actionnés de manière à faire coulisser les ensembles latéraux 14. Puis les vérins 141 latéraux sont actionnés de manière à soulever l'ensemble supérieur 13. Les volets 125 sont rabattus par-dessus le caniveau. Le dispositif est alors en position d'utilisation.

Pour amener le dispositif sur un autre lieu d'utilisation, il suffit de procéder aux mêmes opérations en ordre inverse.

## Revendications

1. Dispositif mobile de lavage ou de désinfection comportant un tunnel pour le passage de véhicules, des moyens de projection (15) d'un liquide contre le véhicule, le tunnel comportant quatre parois, **caractérisé en ce que** les parois du tunnel sont coulissantes les unes par rapport aux autres entre une position de transport dans laquelle le dispositif (1) a un gabarit inférieur à un gabarit de référence, et une position d'utilisation dans laquelle la section intérieure du tunnel permet le passage de véhicules ayant le gabarit de référence.

2. Dispositif selon la revendication 1, **caractérisé en ce qu'**il comporte un châssis (11) et deux ensembles latéraux (14), chaque ensemble latéral (14) étant monté coulissant par rapport au châssis (11) et par rapport à l'autre élément dans une direction transversale par rapport à l'axe du tunnel.

3. Dispositif selon la revendication 1, **caractérisé en ce qu'**il comporte un ensemble inférieur (12) et un ensemble supérieur (13), chaque ensemble (12, 13) étant monté coulissant par rapport à par rapport à l'autre ensemble dans une direction verticale.

4. Dispositif selon les revendications 2 et 3 prises en combinaison, dans lequel l'ensemble inférieur (12) comporte le châssis (11) et deux éléments d'angle inférieurs (121, 122) de part et d'autre du châssis (11), l'ensemble supérieur (13) comportant deux éléments d'angle supérieurs (131, 132) monté coulissants l'un par rapport à l'autre, chaque ensemble latéral étant formé par l'un des éléments d'angle inférieur (121, 122) et l'un des éléments d'angle supérieurs (131, 132) montés coulissants entre eux.

5. Dispositif selon la revendication 4, dans lequel les moyens de projection comportent au moins une rampe (15) sur chaque élément d'angle, les rampes (15) ayant des longueurs de recouvrement dans la position de transport de manière à pouvoir projeter du liquide sur toute la section du véhicule lorsque le dispositif (1) est dans la position d'utilisation.

6. Dispositif selon l'une des revendications précédentes, **caractérisé en ce qu'**il comporte des moyens hydrauliques (111, 141) d'actionnement pour passer de la position de transport à la position d'utilisation et inversement.

7. Dispositif selon la revendication 2, dans lequel chaque élément latéral (14) comporte un chemin de roulement (124) pour des roues du véhicule.

8. Dispositif selon la revendication 7, selon lequel les chemins de roulement (124) sont en recouvrement au-dessus du châssis (11).

9. Dispositif selon la revendication 2, dans lequel le châssis (11) comporte un caniveau (114) de récupération des écoulements de liquide.
